# EUROPÄISCHE PATENTANMELDUNG

(11) **EP 4 708 627 A1**
(43) Veröffentlichungstag der Anmeldung: **11.03.2026**
(21) Anmeldenummer: 25195246.1
(22) Anmeldetag: 11.08.2025
(51) Int. Cl.: H02J 7/70

(54) **LADEEINSATZ SOWIE ELEKTRISCHE VERSORGUNGSEINRICHTUNG MIT EINEM LADEEINSATZ**

(30) Priorität: 29.08.2024 DE 202024104907 U
(71) Anmelder: Pöllet, Armin, 90596 Schwanstetten (DE)
(72) Erfinder: Pöllet, Armin, 90596 Schwanstetten (DE)
(74) Vertreter: FDST Patentanwälte

(57) **Zusammenfassung**

Die Erfindung betrifft einen Ladeeinsatz (10) zum Laden von elektrischen Geräten, welcher zum Einbau in einen Hohlraum ausgebildet ist sowie eine elektrische Versorgungseinrichtung (2) mit einem solchen Ladeeinsatz (10). Dieser weist eine Montageplatte (14) mit einer Frontseite (16) sowie mit einer Rückseite (18) auf, wobei an der Rückseite (18) ein Aufroller (36) angebracht ist mit einem darin angeordneten und reversibel auf- und abrollbaren Ladekabel (38), wobei das Ladekabel (38) an seinem einen Ende einen insbesondere als USB-Stecker ausgebildeten Ladestecker (22) aufweist, der sich in einer Steckrichtung (S) erstreckt. Die Montageplatte (14) weist eine Aufnahme (20) für den Ladestecker (22) auf, die durch einen Boden (28) sowie durch Seitenwände (30) begrenzt ist, wobei der Ladestecker (22) in einer Parkposition in der Aufnahme (20) form- und/oder kraftschlüssig fixiert und reversibel entnehmbar einliegt.

## Beschreibung

Die Erfindung betrifft einen Ladeeinsatz zum Laden von elektrischen Geräten sowie eine elektrische Versorgungseinrichtung mit einem Ladeeinsatz.

Unter Ladeeinsatz wird vorliegend eine Baueinheit zur Montage in einen Hohlraum, beispielsweise ein Gehäuse einer Steckdosenleiste, eine Hohlraumdose oder Unterputzdose und/oder ein sonstiger Hohlraum, wie beispielsweise eine Hohlwand eines Möbel wie beispielsweise eine Küchenzeile verstanden, wobei der Ladeeinsatz zum Laden von elektrischen Geräten, insbesondere Kommunikationsgeräten wie Smartphones, Tabletts usw. ausgebildet ist.

Ladegelegenheiten für derartige elektrische Geräte zeichnen sich häufig dadurch aus, dass die entsprechenden Ladekabel lose herumliegen und stören, wenn sie nicht in Benutzung sind.

Ausgehend hiervon liegt der Erfindung die Aufgabe zugrunde, ein Ladekabel bereitzustellen, welches einfach zu handhaben ist und bei Nichtbenutzung nicht störend ist.

Die Aufgabe wird gemäß der Erfindung gelöst durch einen Ladeeinsatz zum Laden von elektrischen Geräten, insbesondere von Kommunikationsgeräten, wobei der Ladeeinsatz zum Einbau in einen Hohlraum ausgebildet ist und eine Montageplatte mit einer Frontseite sowie mit einer Rückseite aufweist. An der Rückseite ist ein Aufroller angebracht mit einem darin angeordneten, reversibel auf- und abrollbaren Ladekabel, welches an seinem einen Ende einen insbesondere als USB-Stecker ausgebildeten Ladestecker aufweist, welcher sich in einer Steckrichtung erstreckt, die zugleich eine Längsrichtung des Steckers definiert. Die Montageplatte weist eine Aufnahme für den Ladestecker auf, wobei die Aufnahme durch einen Boden sowie Seitenwänden begrenzt ist. Der Ladestecker ist in der Aufnahme in einer Parkposition form- und/oder kraftschlüssig fixiert und liegt in der Aufnahme reversibel entnehmbar ein. Die Steckrichtung des Ladesteckers in der Parkposition definiert zugleich eine Längsrichtung der Aufnahme.

Der Ladestecker ist in der Aufnahme insbesondere beispielsweise durch Rastelemente oder auch Klemmelemente oder alternativ oder ergänzend auch magnetisch fixiert gehalten und kann bei Bedarf jeweils aus der Aufnahme entnommen werden.

Durch die Fixierung in der Aufnahme kann der Ladestecker quasi in diese Aufnahme eingeclipst werden, sodass der Ladestecker an der durch die Parkposition definierten Position in der Aufnahme fixiert ist. Hierdurch wird der besondere Vorteil erreicht, dass der Ladestecker in einer definierten Position in der Aufnahme gehalten ist und nicht etwa lose hervorsteht. Er liegt also geschützt und gesichert in der Aufnahme ein und steht insbesondere nicht über die Frontseite über, zumindest nicht über eine Frontseite einer evtl. angebrachten Blende. Eine Beschädigung des Ladesteckers oder das Kabels ist daher vermieden und es ist ein Stecker- bzw. Kabelschutz erreicht.

Durch den integrierten Aufroller wird das Ladekabel bei Nichtbenutzung automatisch zurückgezogen, sodass das Ladekabel nicht störend beispielsweise auf einer ansonsten benutzten Arbeitsfläche, beispielsweise eine Küchenarbeitsfläche herumliegt.

In zweckdienlicher Ausgestaltung steht der Ladestecker in der Parkposition nicht über die Frontseite der Montageplatte über. Hierdurch ist eine optisch ansprechende Ausgestaltung in der Parkposition erreicht.

Der Ladestecker weist vorzugsweise eine Flachseite auf, mit der er in der Parkposition flach auf dem Boden der Aufnahme aufliegt. Die Steckrichtung des Ladesteckers ist daher nicht senkrecht zur Aufnahme und daher nicht nach vorne (senkrecht zur Frontseite) stehend orientiert. Vielmehr schmiegt sich der Ladestecker flach in die Aufnahme ein. In der Parkposition verläuft der Ladestecker daher parallel zu der Frontseite der Montageplatte.

Entgegen der Steckrichtung des Steckers schließt sich an die Aufnahme, speziell an den Boden ein Durchbruch für eine an den Ladestecker angeschlossenes Kabel auf. Dieses ist daher durch den Durchbruch hindurch von der Frontseite zur Rückseite zu dem dort befindlichen Aufroller geführt. Der Boden der Aufnahme ist im Bereich des Ladesteckers vorzugsweise vollständig geschlossen.

In bevorzugter Weiterbildung weist die Montageplatte eine Entriegelungsvorrichtung zum Lösen des Ladesteckers aus seiner Parkposition auf. Hierdurch wird ein einfaches Lösen und Entriegeln des Ladesteckers aus seiner klemmenden oder rastenden Fixierung in der Aufnahme ermöglicht, sodass der Nutzer den Ladestecker einfach greifen und dann bei Bedarf herausziehen kann.

In bevorzugter Ausgestaltung weist die Entriegelungsvorrichtung ein Entriegelungselement auf, welches bei einer Betätigung der Entriegelungsvorrichtung den Ladestecker aus seiner Parkposition drückt. Über die Entriegelungsvorrichtung wird der Ladestecker daher aktiv in seiner Position versetzt, insbesondere nach vorne aus der Aufnahme herausgedrückt, sodass er vom Benutzer einfach gegriffen werden kann.

Bevorzugt ist das Entriegelungselement im Boden der Aufnahme angeordnet und somit unterhalb des Ladesteckers, wenn sich dieser in der Parkposition befindet. Im Boden ist hierzu eine Freimachung ausgebildet, in der das Entriegelungselement versenkt ist. Der Ladestecker wird daher bei Betätigung des Entriegelungselements vorzugsweise von unten aus der Aufnahme herausgedrückt.

Weiterhin weist die Entriegelungsvorrichtung bevorzugt ein vom Nutzer manuell betätigbares Betätigungselement auf, welches bei seiner Betätigung auf das Entriegelungselement zum Lösen des Ladesteckers einwirkt.

Bevorzugt ist die Entriegelungsvorrichtung als in der Montageplatte gelagerte Kipphebelmechanik ausgebildet, mit dem Betätigungselement an einem Hebelende und dem Entriegelungselement an einem anderen Hebelende. Bevorzugt ist weiterhin zwischen den Hebelenden ein Kipplager ausgebildet, welches an einer Lageraufnahme der Montageplatte gelagert ist.

Diese Kipphebelmechanik ist insbesondere von der Frontseite her in die Montageplatte eingesetzt. Diese weist hierzu eine geeignet geformte Aussparung auf, in die die Kipphebelmechanik eingesetzt ist.

Gemäß einer bevorzugten ersten Variante weist die Kipphebelmechanik eine Wippe auf, auf deren einen Ende das Betätigungselement einwirkt und dessen anderes Ende das Entriegelungselement bildet. Die Wippe ist beispielsweise als ein einfacher abgewinkelter, beispielsweise V-förmiger Steg ausgebildet, welcher sich insbesondere - in einer Aufsicht betrachtet - geradlinig erstreckt. Bei der V-förmigen Ausgestaltung bildet das V-Eck das Kipplager aus, mit dem sich die Wippe beispielsweise an einem Bodenbereich abstützt.

Bevorzugt ist das Betätigungselement seitlich und damit in Querrichtung neben der Aufnahme angeordnet, insbesondere in einem Mittenbereich der Aufnahme, also auf etwa halber Länge der Aufnahme. Das Betätigungselement ist bevorzugt als ein Stift oder als ein Druckknopf ausgebildet, und insbesondere in einer entsprechenden Führung geführt. Die Wippe ist bevorzugt lediglich lose gelagert. Bevorzugt ist die Wippe insbesondere auch nicht mit dem Betätigungselement verbunden, d.h. das Betätigungselement liegt nur lose auf der Wippe auf.

Gemäß einer alternativen Variante ist die Kipphebelmechanik in einer Aufsicht betrachtet vorzugsweise L-förmig ausgebildet, mit einem ersten L-Schenkel, welcher neben der Aufnahme und parallel zur Steckrichtung verläuft und mit einem zweiten L-Schenkel, welcher das Entriegelungselement ausbildet und hierzu im Boden unterhalb der Aufnahme und senkrecht zur Steckrichtung verläuft. Durch diese Ausgestaltung ist zum einen eine einfache Betätigung von der Frontseite her ermöglicht und zugleich wird durch den quer und unterhalb der Aufnahme verlaufenden zweiten L-Schenkel, welcher das Entriegelungselement bildet, eine zuverlässige Entriegelung erreicht.

Gemäß einer ersten bevorzugten Ausgestaltung steht das Betätigungselement nicht über die Frontseite der Montageplatte über. Das Betätigungselement ist daher quasi in die Montageplatte integriert und schließ beispielsweise mit dieser bündig nach vorne hin ab. Gemäß einer alternativen zweiten Ausgestaltung steht das Betätigungselement über die Frontseite der Montageplatte über und lässt sich besonders einfach ertasten.

**In** beiden Fällen ist das Betätigungselement beispielsweise als Stift oder Drüccknopf ausgebildet, welches insbesondere von der Frontseite her gedrückt und damit betätigt werden kann.

Bevorzugt ist die Entriegelungsvorrichtung weiterhin frei von Federelementen oder elastischen Elementen. Es sind daher keine solchen Federelemente oder elastische Elemente vorgesehen, die die Entriegelungsvorrichtung oder Teile hiervon in eine definierte Position drücken oder ziehen. Vielmehr handelt es sich um eine einfache an der Montageplatte gelagerte Mechanik.

Bevorzugt ist der Ladestecker zwischen zwei gegenüberliegenden Seitenwänden klemmend oder formschlüssig gehalten. An den Seitenwänden sind hierzu insbesondere geeignete Fixierelemente ausgebildet.

Die Seitenwände erstrecken sich gemäß einer ersten bevorzugten Variante parallel zur Steckrichtung und damit zur Längsrichtung der Aufnahme. Die Aufnahme weist insofern eine Breite auf, die an die Breite des Ladesteckers angepasst ist, sodass dieser passgenau zwischen den Seitenwänden insbesondere klemmend gehalten ist.

Bei einer alternativen Ausführungsvariante verlaufen die Seitenwände, zwischen denen der Ladestecker fixiert ist, senkrecht zur Steckrichtung bzw. Längsrichtung.

In diesem Fall ist daher der Ladestecker nicht seitlich gehalten, sondern in Längsrichtung zwischen einer vorderen und einer rückseitigen Seitenwand fixiert.

In einer bevorzugten Ausführungsvariante ist die Aufnahme als eine Griffmulde ausgebildet, wobei der Ladestecker in der Parkposition mittig in der Griffmulde einliegt, sodass in der Parkposition seitlich neben dem Ladestecker zwei Eingriffbereiche ausgebildet sind, sodass der Ladestecker mit zwei Fingern gegriffen werden kann. Bei dieser Ausgestaltung ist vorzugsweise auf eine zusätzliche Entriegelungsvorrichtung verzichtet. Alternativ ist ergänzend eine Entriegelungsvorrichtung ausgebildet.

Speziell bei dieser Ausführungsvariante mit der Griffmulde ist der Ladestecker in der Parkposition in Längsrichtung zwischen einer vorderen und einer rückseitigen Seitenwand fixiert. Der Ladestecker ist daher in Längsrichtung form- oder kraftschlüssig in der Aufnahme gehalten, und zwar vorzugsweise ausschließlich in Längsrichtung fixiert. Er ist also an seinen parallel zur Steckrichtung verlaufenden Seiten nicht gehalten. Bei dieser Ausführungsvariante weist eine Stirnwand der Aufnahme vorzugsweise eine Ausbuchtung auf, in die ein Vorderende des Ladesteckers in der Parkposition aufgenommen ist und in der dieses Vorderende formschlüssig gehalten ist. Der Formschluss ist dabei insbesondere lediglich in einer Querrichtung quer zur Steckrichtung ausgebildet. Die Ausbuchtung ist bevorzugt in Richtung zur Frontseite hin offen, sodass das Vorderende von vorne, also von der Frontseite her in die Ausbuchtung eingesteckt werden kann. Bei dem Vorderende handelt es sich insbesondere um das vorderste Ende des Ladesteckers. Dieses ist als Steckende ausgebildet, welches in eine entsprechende Ladebuchse des elektrischen Gerätes eingesteckt wird. Dieses Steckende ist typischerweise im Vergleich zu einem rückwärtigen Bereich des Ladesteckers verjüngt und die Breite der Ausbuchtung ist an die Breite dieses verjüngten Teilbereichs angepasst.

Bevorzugt weist der Ladeeinsatz die Größe eines herkömmlichen Steckdoseneinsatzes für den Einbau beispielsweise in Unterputz- oder Hohlwanddosen auf. Er weist daher eine Standard-Größe auf, sodass er universell insbesondere mit anderen Standardkomponenten, wie Steckdosen eingesetzt und kombiniert werden kann. Sofern von herkömmlichen Steckdoseneinsätzen gesprochen wird, so werden hierunter insbesondere übliche, einphasige Haushalts-Steckdosen (Schuko-Steckdosen) verstanden, wie sie insbesondere in Deutschland eingesetzt werden. Die Größe ist daher insbesondere angepasst für den Einsatz in derartigen Unterputz- oder Hohlwanddosen, die typischerweise einen Durchmesser von 68 mm aufweisen.

Die Montageplatte weist bevorzugt eine rechteckförmige, insbesondere quadratische Außenkontur sowie vorzugsweise eine mittige, insbesondere kreisrunde Erhebung auf, wobei in der Erhebung die Aufnahme ausgebildet ist. In der Erhebung ist vorzugsweise auch die zuvor beschriebene Entriegelungsvorrichtung eingesetzt.

Bevorzugt weist die mittige Erhebung einen Durchmesser auf, welcher einem Innendurchmesser der zuvor beschriebenen herkömmlichen Steckdose entspricht. Bei einer Kombination des Ladeeinsatzes mit Steckdosen ist daher insgesamt ein einheitliches Erscheinungsbild erreicht.

Das Ladekabel weist zweckdienlicherweise ein zweites Ende insbesondere mit einem Anschlussstecker auf, wobei das zweite Ende aus dem Aufroller an der Rückseite herausgeführt ist und welches zum Anschluss an eine Ladeelektronik vorgesehen ist und im montierten Zustand an einer solchen Ladeelektronik angeschlossen ist. Das Ladekabel ist daher mit seinem zweiten Ende wieder aus dem Aufroller herausgeführt und mit diesem an der Ladelektronik anschließbar. Das Ladekabel weist dabei vorzugsweise an seinen zwei gegenüberliegenden Enden jeweils einen Stecker auf, nämlich zum einen den nach vorne aus dem Ladeeinsatz herausziehbaren Ladestecker und gegenüberliegend hierzu den Anschlussstecker zum Anschluss und Einstecken an eine entsprechende Buchse einer Ladeelektronik. Der Ladeeinsatz selbst weist daher in bevorzugter Ausgestaltung keine Ladeelektronik auf und kann daher besonders platzsparend ausgebildet sein. Speziell ist daher auch kein 220 V-Anschluss des Ladeeinsatzes erforderlich. Vielmehr ist Ladeelektronik in bevorzugter Ausgestaltung getrennt von dem Ladeeinsatz angeordnet.

Alternativ hierzu ist eine Ladeelektronik in den Ladeeinsatz integriert. Bei dieser Variante ist der Ladeeinsatz mit Anschlüssen, insbesondere mit Klemmanschlüssen, zum Anschluss an eine 220V-Versorgungsleitung ausgebildet.

Bevorzugt weist die Montageplatte an ihrer Rückseite weiterhin zumindest einen Haltesteg auf, an dem der Aufroller befestigt ist. Insbesondere sind zwei gegenüberliegende Haltestege angebracht, zwischen denen der Aufroller angeordnet ist. Dieser ist beispielsweise klemmend, rastend, durch eine Verklebung oder durch eine Schraubverbindung an dem zumindest einen Haltesteg fixiert.

Die Aufgabe wird gemäß der Erfindung weiterhin gelöst durch eine elektrische Versorgungsvorrichtung, die zumindest eine Steckdose sowie eine Ladeeinrichtung aufweist mit einem Ladeeinsatz, wie er zuvor beschrieben wurde. Bevorzugt weist die elektrische Versorgungvorrichtung mehrere Steckdosen beispielsweise zwei oder drei Steckdosen auf. Bei der Versorgungseinrichtung handelt es sich gemäß einer ersten Variante um eine Steckdosenleiste, insbesondere eine mobile Steckdosenleiste mit einem Anschlusskabel, welches in eine Steckdose einsetzbar ist. Die Steckdosenleiste kann jedoch auch als eine stationäre Steckdosenleiste ausgebildet sein und beispielsweise an einem Möbelstück beispielsweise einem Schreibtisch oder auch an einem Element einer Küchenzeile angeordnet sein. Weiterhin kann es sich bei der elektrischen Versorgungsvorrichtung um eine Steckdosenanordnung an einer Wand, beispielsweise eine Hohlwand und speziell in einem Möbelstück oder einer Möbelwand, speziell wiederum beispielsweise einer Küchenzeile handeln. Bevorzugt ist die elektrische Versorgungseinrichtung in eine Küchenzeile integriert, insbesondere in einen Wandbereich oberhalb einer Arbeitsfläche.

In allen Fällen zeichnet sich die elektrische Versorgungvorrichtung dadurch aus, dass zumindest ein oder mehrere Steckdosen und zusätzlich die Lademöglichkeit über die Ladeeinrichtung bereitgestellt sind. Der zuvor beschriebene Ladeeinsatz ist dabei Teil der Ladeeinrichtung. Bevorzugt ist noch eine separate Ladeelektronik zugehörig, an der das Ladekabel des Ladeeinsatzes angeschlossen ist, wie dies zuvor beschrieben wurde.

Die elektrische Versorgungsvorrichtung weist weiterhin in bevorzugter Ausgestaltung eine gemeinsame, einheitliche Frontseite auf, die beispielsweise durch eine Blende ausgebildet ist, in der die zumindest eine Steckdose sowie der Ladeeinsatz aufgenommen sind.

Ausführungsbeispiele der Erfindung werden nachfolgend anhand der Figuren näher erläutert. Diese zeigen in teilweise vereinfachten Darstellungen:
- FIG 1: eine als mobile Steckdosenleiste ausgebildete elektrische Versorgungseinrichtung mit einem Ladeeinsatz,
- FIG 2A: eine Aufsicht auf die Frontseite eines Ladeeinsatzes gemäß einer ersten Ausführungsvariante,
- FIG 2B: eine perspektivische Ansicht auf die Frontseite der ersten Ausführungsvariante,
- FIG 2C, 2D: zwei Seitenansichten des Ladeeinsatzes gemäß der ersten Ausführungsvariante,
- FIG 3: eine perspektivische Ansicht einer Frontseite einer zweiten Ausführungsvariante,
- FIG 4: eine perspektivische Ansicht einer Frontseite einer dritten Ausführungsvariante, sowie
- FIG 5A-5C: eine weitere Ausführungsvariante des Ladeeinsatzes in unterschiedlichen Darstellungen.

In den Figuren sind gleichwirkende Teile mit den gleichen Bezugszeichen versehen.

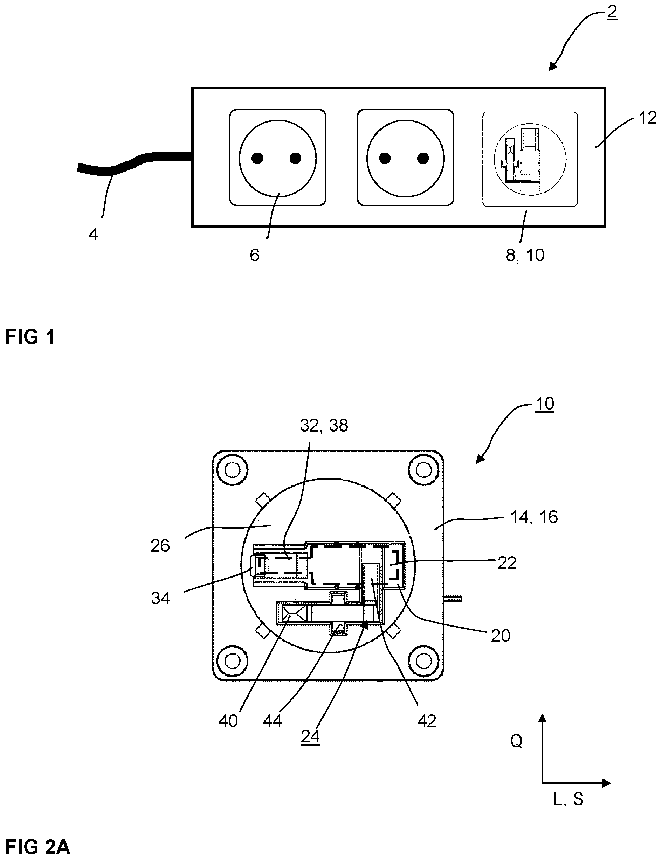

Eine in der FIG 1 dargestellte elektrische Versorgungseinrichtung 2 ist als eine mobile Steckdosenleiste ausgebildet, welche also üblicherweise beliebig positionierbar ist und über ein Anschlusskabel 4, welches in FIG 1 lediglich angedeutet ist, an eine Steckdose anschließbar ist. Die Versorgungseinrichtung 2 weist im Ausführungsbeispiel zwei Steckdosen 6 sowie ergänzend eine Ladeeinrichtung 8 mit einem Ladeeinsatz 10 auf. Dieser ist ähnlich wie die Steckdosen 6 in ein Gehäuse 12 mit entsprechenden Aufnahmen eingesetzt. Innerhalb dieses Gehäuses 12 ist bevorzugt weiterhin eine hier nicht näher dargestellte Ladeelektronik integriert, die Teil der Ladeeinrichtung 8 ist.

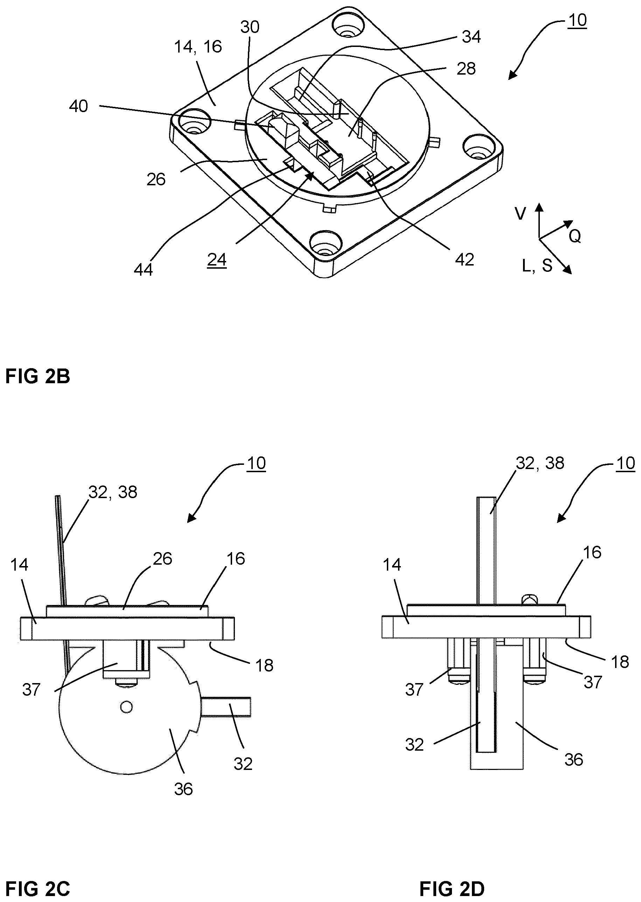

Der Ladeeinsatz 10 weist vorzugsweise die gleiche Größe wie die weiteren Steckdosen 6 auf. Hierdurch ist insgesamt ein einheitliches Erscheinungsbild erreicht und zudem lässt sich der Ladeeinsatz 10 in beliebiger Weise mit den herkömmlichen Steckdosen kombinieren. Beispielsweise ist eine gemeinsame Blende für die Steckdosen 6 und den Ladeeinsatz 10 vorgesehen. Alternativ oder ergänzend weist jeder Einsatz (Steckdosen 6, Ladeeinsatz 10) eine einsatzspezifische Blende auf, wobei diese jedoch ein gleiches Erscheinungsbild haben oder auch identisch sind. Im Ausführungsbeispiel sind diese einsatzspezifischen Blenden insbesondere durch einen quadratischen Blendrahmen gebildet mit einer zentralen, kreisrunden Ausnehmung bzw. oder Vertiefung, wobei in der Ausnehmung der Ladeeinsatz 10 (insbesondere dessen Erhebung 26, vgl. FIG 2B) angeordnet ist und die Vertiefung zur Aufnahme eines Steckers dient.

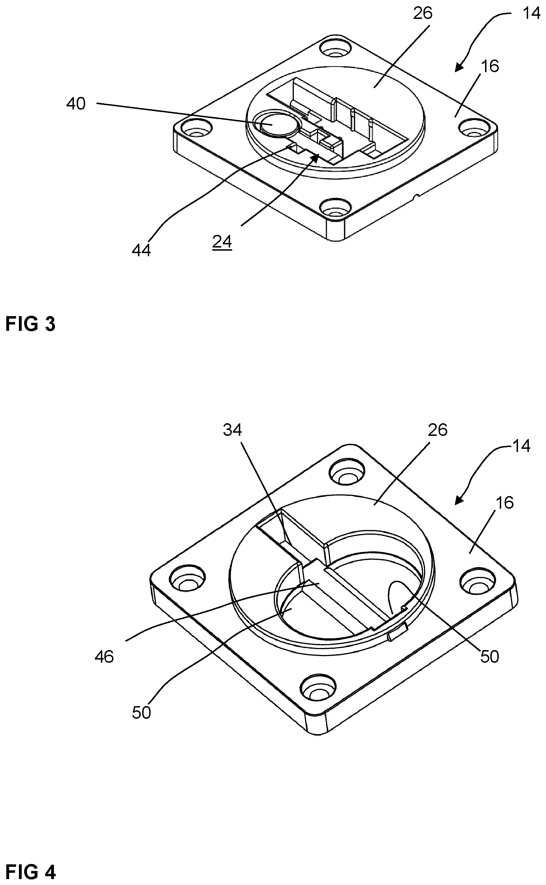

Unterschiedliche Ausführungsvarianten des Ladeeinsatzes 10 sind in den Figuren 2A bis 2B als erste Variante sowie in FIG 3 sowie FIG 4 als zweite und dritte Varianten dargestellt.

In allen Ausführungsvarianten weist der jeweilige Ladeeinsatz 10 eine insbesondere quadratische Montageplatte 14 auf, welche im Ausführungsbeispiel in den Eckbereichen jeweils Schraublöcher für eine Schraubbefestigung der Montageplatte 14 aufweist. Alternativ hierzu wird der Ladeeinsatz 10 anderweitig und beispielsweise durch Einclipsen / Verrasten befestigt.

Die Montageplatte 14 weist eine Frontseite 16 sowie eine Rückseite 18 (vergleiche hierzu FIG 2C, FIG 2D) auf. An der Frontseite 16 ist eine Aufnahme 20 für einen lediglich in der FIG 2A durch eine gestrichelte Linie angedeuteten Ladestecker 22 ausgebildet. Bei der ersten sowie zweiten Ausführungsvariante ist zusätzlich noch eine Entriegelungsvorrichtung 24 an der Frontseite 16 ausgebildet.

Die Aufnahme 20 sowie die Entriegelungsvorrichtung 24 sind vorzugsweise innerhalb einer mittigen, kreisrunden Erhebung 26 integriert.

Die Aufnahme 20 weist einen Boden 28 auf, welcher parallel zur Frontseite 16 und damit parallel zu einer durch diese Frontseite 16 definierten Ebene verläuft. Sie erstreckt sich in einer Längsrichtung L, die zugleich einer Steckrichtung S des in der Aufnahme 20 einliegenden Ladesteckers 22 entspricht. Die Aufnahme 20 ist seitlich weiterhin durch mehrere Seitenwände 30 begrenzt, die insgesamt eine umlaufende Seitenwandung ausbilden.

Die Montageplatte 14 erstreckt sich weiterhin in einer Querrichtung Q. Die Frontseite 16 und die Frontebene sind durch die Längsrichtung L und die Querrichtung Q aufgespannt. Weiterhin weist die Montageplatte 14 in einer Vertikalrichtung V noch eine Dicke auf. In Vertikalrichtung V erstreckt sich daher die Montageplatte 14 von der Rückseite 18 zur Frontseite 16. Entgegen der Vertikalrichtung V wird der gesamte Ladeeinsatz 10 auch in die Versorgungseinrichtung 2 eingesetzt.

Am hinteren Ende des Ladesteckers 22 schließt sich ein Kabel 32 an, welches durch einen Durchbruch 34 in der Montageplatte 14 nach hinten zur Rückseite 18 geführt wird (vergleiche hierzu insbesondere die Figuren 2A - 2D).

An der Rückseite 18 ist ein Aufroller 36 angebracht, in dem das Kabel 32 automatisch aufgerollt ist. Hierzu ist ein geeigneter Federmechanismus innerhalb des Aufrollers 36 angeordnet.

Der Aufroller 36 ist zwischen zwei gegenüberliegenden in Vertikalrichtung V abstehenden Haltestegen 37 angebracht, und zwar beispielsweise über Befestigungsschrauben.

Ein gegenüberliegendes Ende des Kabels 32 ist aus dem Aufroller 36 wieder herausgeführt und weist vorzugsweise einen hier nicht näher dargestellten Anschlussstecker auf, welcher im eingebauten Zustand mit einer hier nicht näher dargestellten Ladeelektronik verbunden ist. Das Kabel 32 mit dem Ladestecker 22 und dem eventuell weiterhin angebrachten Anschlussstecker bilden insgesamt ein Ladekabel 38 aus. Alternativ zu einer Verwendung eines Anschlusssteckers kann das Kabel 32 auch direkt mit der Ladeelektronik verbunden sein.

Die Entriegelungsvorrichtung 24 ist im Ausführungsbeispiel jeweils durch eine Kipphebelmechanik ausgebildet. Sie ist insbesondere L-förmig ausgebildet und weist einen ersten L-Schenkel auf, welcher seitlich neben der Aufnahme 20 und parallel zu dieser verläuft. Dieser erste L-Schenkel bildet dabei Teil eines Kipphebels aus, an dessen einem Hebelende ein Betätigungselement 40 ausgebildet ist. Die Entriegelungsvorrichtung 24 weist weiterhin einen zweiten L-Schenkel auf, welcher rechtwinklig von dem ersten L-Schenkel abgewinkelt ist und welcher insbesondere auch zunächst nach unten entgegen der Vertikalrichtung V abgewinkelt verläuft, und zwar derart, dass er in eine Freimachung im Boden 28 eintaucht und damit unterhalb der Aufnahme 20 bzw. des Ladesteckers 22 angeordnet ist, wenn dieser sich in seiner Parkposition in der Aufnahme 20 befindet (vgl. hierzu insb. FIG 2A sowie FIG 2B).

Dieses zweite Hebelende bildet ein Entriegelungselement 42 aus. Die Kipphebelmechanik weist weiterhin ein Kipplager 44 auf, welches beispielsweise durch einen in Querrichtung verlaufenden Lagerbolzen oder seitlich abstehende Lagernoppen ausgebildet ist und in einer entsprechenden Lageraufnahme in der Montageplatte 14 aufgenommen ist. Die Montageplatte 14 weist allgemein eine geeignete Aussparung für die Entriegelungsvorrichtung 24 auf, in der diese von der Frontseite her eingesetzt ist. Die Entriegelungsvorrichtung 24 ist im Ausführungsbeispiel allein durch die beschriebene Mechanik mit den beiden L Schenkeln und dem Kipplager 44 gebildet, ohne dass weitere Elemente vorgesehen sind. Insbesondere weist die Entriegelungsvorrichtung 24 keine Federelemente oder sonstigen elastischen Elemente auf, die die Entriegelungsvorrichtung in einer definierten Position halten bzw. drücken oder ziehen.

Wie speziell anhand der FIG 2B weiterhin zu erkennen ist, sind an den Seitenwänden randseitig in Vertikalrichtung V orientierte Klemmstege ausgebildet, zwischen denen der Ladestecker 22 eingeklemmt ist, wenn er sich in der Aufnahme 20 befindet.

Allgemein ist der Ladestecker 22 in einer Parkposition in der Aufnahme 20 fixiert gehalten. Neben der klemmenden Fixierung kann auch eine formschlüssige Fixierung beispielsweise durch Rastnasen vorgesehen sein. Alternativ oder ergänzend ist grundsätzlich auch eine magnetische Fixierung ermöglicht.

In allen Fällen liegt der Ladestecker 22 mit einer Flachseite flach auf dem Boden 28 der Aufnahme 20 auf, und zwar insbesondere derart, dass der Ladestecker 22 nicht über die Frontseite 16 nach vorne übersteht.

Ist er demgegenüber durch die Entriegelungsvorrichtung 24 entriegelt, so springt er quasi ein Stück weit aus der Frontseite 16 nach vorne hervor und kann einfach gegriffen werden, um dann auf die gewünschte Länge ausgezogen zu werden. Nach Gebrauch wird das Ladekabel 38 über den Aufroller 36 wieder aufgerollt und der Ladestecker 22 wird wieder in die Aufnahme 20 eingeclipst, sodass er in seiner Parkposition fixiert gehalten ist.

Das Betätigungselement 40 ist bei der Ausführungsvariante gemäß FIG 2 stiftförmigen nach Art eines in Vertikalrichtung V abstehenden Stiftes ausgebildet, sodass dieses also über die Frontseite 16 und damit über eine entsprechende Frontebene nach vorne übersteht.

Bei der Ausführungsvariante gemäß FIG 3 ist das Betätigungselement 40 demgegenüber bündig abschließend angeordnet und steht also nicht über.

In beiden Fällen lässt sich das Betätigungselement 40 durch Drücken entgegen der Vertikalrichtung V betätigen. Aufgrund der Kipphebelmechanik für dies dazu, dass das Entriegelungselement 42 in Vertikalrichtung V nach oben angehoben wird und dadurch bei einliegendem Ladestecker 22 diesen aus der Fixierung und aus der Aufnahme 20 herausdrückt.

Bei der in der FIG 4 dargestellten Ausführungsvariante ist anstelle einer Entriegelungsvorrichtung 24 eine Griffmulde 46 ausgebildet, die bei einliegendem Ladestecker 22 (hier nicht dargestellt) zwei seitliche Eingriffsbereiche ausbildet, sodass der Ladestecker 22 von einem Nutzer gegriffen und herausgezogen werden kann. Die beiden Eingriffsbereiche sind durch einen erhabenen, mittigen Steg 48 des Bodens 28 unterteilt. Auf diesem mittigen Steg 48 liegt der Ladestecker 22 mit seiner Flachseite in der Parkposition auf. Der Steg 48 ist dabei zumindest im Bereich seiner Auflagefläche für den Ladestecker 22 schmäler als dieser ausgebildet, so dass dieser auch von unten hintergriffen werden kann. Im Ausführungsbeispiel weist der Steg 48 seitliche Flanken auf, die ausgehend von der Auflagefläche schräg nach außen verlaufen.

Der Ladestecker 22 ist bei dieser Ausführungsvariante in Längsrichtung L klemmend Innerhalb der Aufnahme 20 gehalten. Er stützt sich also an einer Stirnwand sowie an einer eine Rückwand ab. An der Stirnwand ist eine Aussparung 50 ausgebildet, sodass ein vorderes Ende des Ladesteckers 22 dort formschlüssig aufgenommen ist, insbesondere derart, dass er in Querrichtung Q fixiert ist. In Vertikalrichtung V ist die Aussparung 50 nach oben offen, sodass der Ladestecker 22 von oben eingesetzt werden kann.

Zur Rückwand hin schließt sich an die Griffmulde 46 eine schmale Vertiefung an, in die das Kabel 32 eingeführt ist und in der der Durchbruch 34 zur Rückseite 16 ausgebildet ist.

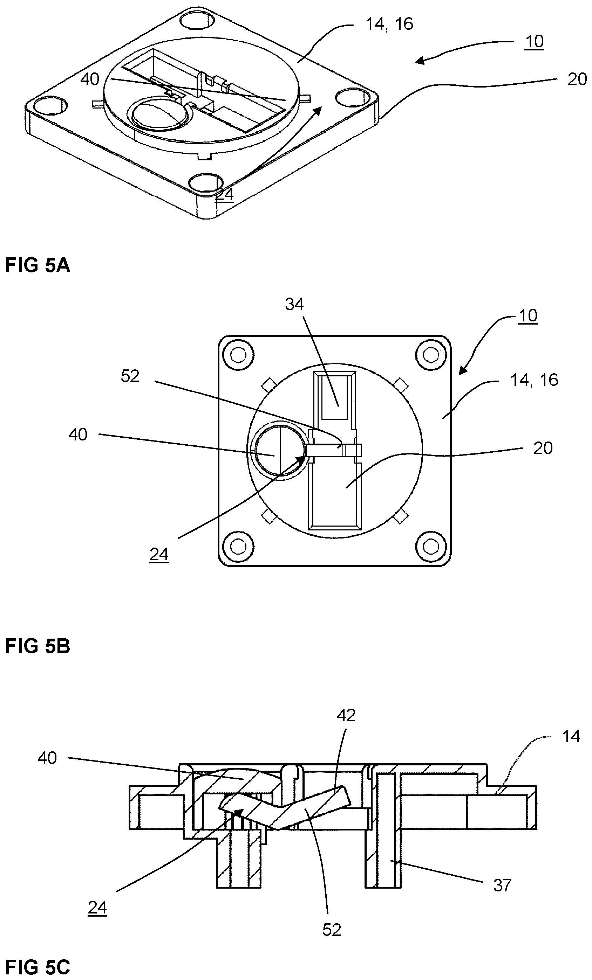

In den Figuren 5A bis 5C ist eine weitere Variante des Ladeeinsatzes 10 dargestellt, und zwar mit einer bevorzugten Ausgestaltung einer Kipphebelmechanik als Entriegelungsvorrichtung 24. FIG 5A zeigt eine perspektivische Ansicht, FIG 5B eine Aufsicht und FIG 5C eine Schnittansicht. Der Aufroller 36 ist nicht dargestellt.

Die Kipphebelmechanik weist eine Wippe 52 auf, welche insbesondere als ein einfacher Steg oder Streifen ausgebildet ist, der - in einer Aufsicht betrachtet - sich linear erstreckt (vgl. FIG 5B). Die Wippe 52 ist - in einer Seitenansicht betrachtet - insbesondere V-förmig ausgebildet (vgl. FIG 5C).

Die Wippe 52 erstreckt sich bevorzugt in Querrichtung Q und gelangt mit ihrem einen Hebelende in einen Betätigungsraum seitlich neben der Aufnahme 20. In diesem Betätigungsraum ist das Betätigungselement 40 geführt, welches insbesondere nach Art eines vorzugsweise versenkten Druckknopfes ausgebildet ist. Bei der Betätigung des Druckknopfes wird das andere Hebelende der Wippe 52, welches das Entriegelungselement 42 bildet, nach oben gedrückt, so dass der in der Aufnahme 20 einliegende Ladestecker 22 herausgedrückt wird. FIG 5C zeigt eine Entriegelungsposition, bei der das Hebelende nach oben gedrückt ist. Beim Einlegen des Ladesteckers 22 wird das Hebelende wieder nach unten gedrückt und dabei der Druckknopf angehoben.

Die Kipphebelmechanik gemäß FIG 5 ist besonderes einfach und robust ausgebildet.

### Bezugszeichenliste

- 2: elektrische Versorgungseinrichtung
- 4: Anschlusskabel
- 6: Steckdose
- 8: Ladeeinrichtung
- 10: Ladeeinsatz
- 12: Gehäuse
- 14: Montageplatte
- 16: Frontseite
- 18: Rückseite
- 20: Aufnahme
- 22: Ladestecker
- 24: Entriegelungsvorrichtung
- 26: Erhebung
- 28: Boden
- 30: Seitenwände
- 32: Kabel
- 34: Durchbruch
- 36: Aufroller
- 37: Haltesteg
- 38: Ladekabel
- 40: Betätigungselement
- 42: Entriegelungselement
- 44: Kipplager
- 46: Griffmulde
- 48: Steg
- 50: Aussparung
- 52: Wippe
- L: Längsrichtung
- S: Steckrichtung
- Q: Querrichtung
- V: Vertikalrichtung

## Patentansprüche

1. Ladeeinsatz (10) zum Laden von elektrischen Geräten, welcher zum Einbau in einen Hohlraum ausgebildet ist, insbesondere zum Einbau in eine Unterputz- oder Hohlwanddose, mit einer Montageplatte (14), die eine Frontseite (16) sowie eine Rückseite (18) aufweist und an deren Rückseite (18) ein Aufroller (36) angebracht ist mit einem darin angeordneten und reversibel auf- und abrollbaren Ladekabel (38), wobei das Ladekabel (38) an seinem einen Ende einen insbesondere als USB-Stecker ausgebildeten Ladestecker (22) aufweist, der sich in einer Steckrichtung (S) erstreckt, wobei die Montageplatte (14) eine Aufnahme (20) für den Ladestecker (22) aufweist, die einen Boden (28) sowie Seitenwände (30) aufweist, wobei der Ladestecker (22) in einer Parkposition in der Aufnahme (20) form- und/oder kraftschlüssig fixiert und reversibel entnehmbar einliegt.

2. Ladeeinsatz (10) nach dem vorhergehenden Anspruch, wobei der Ladestecker (22) in der Parkposition nicht über die Frontseite (16) der Montageplatte (14) übersteht, wobei der Ladestecker (22) bevorzugt eine Flachseite aufweist, mit der er in der Parkposition flach auf dem Boden (28) der Aufnahme (20) aufliegt.

3. Ladeeinsatz (10) nach einem der vorhergehenden Ansprüche, wobei anschließend an die Aufnahme (20), insbesondere entgegen der Steckrichtung (S) des Ladesteckers (22), die Montageplatte (14) einen Durchbruch (34) für ein an den Ladestecker (22) angeschlossenes Kabel aufweist.

4. Ladeeinsatz (10) nach einem der vorhergehenden Ansprüche, wobei die Montageplatte (14) eine Entriegelungsvorrichtung (24) zum Lösen des Ladesteckers (22) aus seiner Parkposition aufweist.

5. Ladeeinsatz (10) nach dem vorhergehenden Anspruch, wobei die Entriegelungsvorrichtung (24) ein Entriegelungselement (42) aufweist, welches bei einer Betätigung der Entriegelungsvorrichtung (24) den Ladestecker (22) aus seiner Parkposition drückt, wobei das Entriegelungselement (42) bevorzugt im Boden (28) der Aufnahme (20) angeordnet ist.

6. Ladeeinsatz (10) nach dem vorhergehenden Anspruch, wobei die Entriegelungsvorrichtung (24) ein Betätigungselement (40) aufweist, welches bei seiner Betätigung auf das Entriegelungselement (42) zum Lösen des Ladesteckers (22) einwirkt.

7. Ladeeinsatz (10) nach dem vorhergehenden Anspruch, wobei die Entriegelungsvorrichtung (24) als in der Montageplatte (14) gelagerte Kipphebelmechanik ausgebildet ist mit dem Betätigungselement (40) an einem Hebelende und dem Entriegelungselement (42) an einem anderen Hebelende, wobei die Kipphebelmechanik vorzugsweise eine Wippe aufweist, auf deren einen Ende das Betätigungselement (40) einwirkt und dessen anderes Ende das Entriegelungselement (42) bildet und das Betätigungselement (40) weiter bevorzugt in einer Querrichtung (Q) neben der Aufnahme (20) angebracht ist und insbesondere nach Art eines Druckknopfes ausgebildet ist.

8. Ladeeinsatz (10) nach dem vorhergehenden Anspruch, wobei die Kipphebelmechanik in einer Aufsicht L-förmig ausgebildet ist, mit einem ersten L-Schenkel, welcher neben der Aufnahme (20) und parallel zur Steckrichtung (S) verläuft und einen zweiten L-Schenkel, welcher das Entriegelungselement (42) ausbildet und hierzu im Boden (28) der Aufnahme (20) und senkrecht zur Steckrichtung (S) verläuft.

9. Ladeeinsatz (10) nach einem der Ansprüche 4 bis 8, wobei die Entriegelungsvorrichtung (24) frei von Federelementen oder elastischen Elementen ist.

10. Ladeeinsatz (10) nach einem der vorhergehenden Ansprüche, wobei der Ladestecker (22) zwischen den Seitenwänden (30) klemmend oder formschlüssig gehalten ist, wobei die Seitenwände (30) vorzugsweise parallel zur Steckrichtung (S) verlaufen.

11. Ladeeinsatz (10) nach einem der vorhergehenden Ansprüche, wobei die Aufnahme (20) als eine Griffmulde (46) ausgebildet ist, in der der Ladestecker (22) in der Parkposition mittig einliegt mit zwei seitlich neben dem Ladestecker (22) ausgebildeten Eingriffbereichen, so dass der Ladestecker (22) mit zwei Fingern gegriffen werden kann.

12. Ladeeinsatz (10) nach einem der vorhergehenden Ansprüche, wobei der Ladestecker (22) in Steckrichtung (S) form- oder kraftschlüssig in der Aufnahme (20) gehalten ist und eine Stirnwand der Aufnahme (20) vorzugsweise eine Ausbuchtung für ein Vorderende des Ladesteckers (22) aufweist, in der dieser vorzugsweise formschlüssig gehalten ist.

13. Ladeeinsatz (10) nach einem der vorhergehenden Ansprüche, wobei die Montageplatte (14) eine rechteckförmige, insbesondere quadratische Außenkontur aufweist mit einer mittigen, insbesondere kreisrunden Erhebung (26), in der die Aufnahme (20) ausgebildet ist und bevorzugt auch die Entriegelungsvorrichtung (24) nach einem der Ansprüche 4 bis 9.

14. Ladeeinsatz (10) nach einem der vorhergehenden Ansprüche, wobei das Ladekabel (38) ein zweites Ende insbesondere mit einem Anschlussstecker aufweist, wobei das zweite Ende aus dem Aufroller (36) an der Rückseite (18) herausgeführt ist, und welches im montierten Zustand an einer Ladeelektronik angeschlossen ist.

15. Elektrische Versorgungsvorrichtung (2), insbesondere eine Steckdosenleiste oder auch eine Steckdosenanordnung an einer Wand oder in einem Möbelstück, mit zumindest einer Steckdose sowie mit einer Ladeeinrichtung, die einen Ladeeinsatz (10) nach dem vorhergehenden Ansprüchen umfasst, wobei
- innerhalb der Versorgungsvorrichtung (2) vorzugsweise eine Ladeelektronik angeordnet ist, an der das Ladekabel (38) des Ladeeinsatzes (10) angeschlossen ist, und / oder
- die Versorgungseinrichtung (2) vorzugsweise eine einheitliche Frontseite (16) aufweist, die beispielsweise durch eine Blende gebildet ist und in der die zumindest eine Steckdose und der Ladeeinsatz (10) aufgenommen sind.
